# FASCICULE DE BREVET EUROPEEN

(11) **EP 3 707 063 B1**
(45) Date de publication et mention de la délivrance du brevet: **01.12.2021**
(21) Numéro de dépôt: 18815267.2
(22) Date de dépôt: 17.10.2018
(51) Int. Cl.: B62D 25/08, B60R 13/07

(54) **ENSEMBLE D'AUVENT D'UN VEHICULE AUTOMOBILE, COMPORTANT UN DEGAGEMENT DE PASSAGE D'UN ESSUIE GLACE QUI EST CONFIGURE EN DEFLECTEUR D'EAU.**
MOTORHAUBENANORDNUNG FÜR KRAFTFAHRZEUG MIT EINEM FREIRAUM FÜR DEN DURCHGANG EINES ALS WASSERABLENKER AUSGEBILDETEN SCHEIBENWISCHERS
MOTOR VEHICLE COWL ASSEMBLY, COMPRISING A CLEARANCE FOR THE PASSAGE OF A WINDSCREEN WIPER THAT IS CONFIGURED AS A WATER DEFLECTOR

(30) Priorité: 06.11.2017 FR 1760369
(43) Date de publication de la demande: 16.09.2020
(73) Titulaire: PSA Automobiles SA, 78300 Poissy (FR)
(72) Inventeur: VALLON, Joan, 27730 Bueil (FR)
(86) Numéro de dépôt international: PCT/FR2018/052590
(87) Numéro de publication internationale: WO 2019/086779

(56) Documents cités:
- EP-A1- 0 331 644
- EP-A1- 2 100 799
- JP-U- H0 373 273

## Description

La présente invention relève du domaine des véhicules automobiles et plus particulièrement des éléments de carrosserie pourvus d'un ou de plusieurs déflecteurs d'eau. L'invention relève plus spécifiquement d'un ensemble d'auvent pourvu d'un collecteur d'eau comportant au moins un déflecteur favorisant l'écoulement d'eau hors de l'ensemble d'auvent.

Les véhicules automobiles sont classiquement équipés à leur partie avant d'un ensemble d'auvent qui s'étend en longueur à l'avant du véhicule suivant son extension transversale. Transversalement suivant son extension en largeur, l'ensemble d'auvent est interposé entre la base du parebrise et le capot avant du véhicule suivant l'extension longitudinale du véhicule. L'ensemble d'auvent s'étend aussi verticalement entre le capot avant et la base du parebrise du véhicule suivant l'extension verticale du véhicule.

L'ensemble d'auvent a pour fonction de collecter de l'air à la base du parebrise et de le diriger vers l'habitacle et/ou vers une bouche d'admission d'air d'un circuit aéraulique d'une installation de conditionnement d'air. L'ensemble d'auvent a aussi pour fonction de collecter et d'évacuer de l'eau, notamment les eaux de ruissellement provenant du parebrise.

A cet effet, l'ensemble d'auvent comprend un collecteur d'air coiffé par une grille, permettant le passage d'air extérieur à son travers vers le collecteur d'air. L'air admis dans le collecteur d'air via la grille est alors dirigé vers l'habitacle et/ou vers l'installation de conditionnement d'air. Le collecteur d'air est longitudinalement bordé par un collecteur d'eau agencé en gouttière, qui s'étend transversalement vers le parebrise depuis le collecteur d'air. Le collecteur d'eau permet de drainer les eaux de ruissellement pour leur évacuation hors de l'ensemble d'auvent.

Par ailleurs, les véhicules automobiles sont classiquement munis d'au moins un essuie-glace pour nettoyer le parebrise et/ou en chasser les eaux de ruissellement. L'essuie-glace est installé à la base du parebrise, entre le parebrise et le collecteur d'air, et est équipé d'une motorisation pour sa mise en mobilité par pivotement alterné procurant typiquement un balayage du parebrise.

Le ou les essuie-glace sont munis d'un balai et sont montés sur le véhicule via l'une de leurs extrémités, qui est à cet effet équipée d'un arbre d'entraînement de l'essuie-glace via sa motorisation. L'arbre d'entraînement équipant l'un au moins des essuie-glace émerge alors à travers le fond du collecteur via une ouverture ménagée à son travers. Une coiffe de protection de l'arbre d'entraînement est subsidiairement prévue pour protéger la partie de l'arbre d'entraînement qui émerge hors du fond du collecteur d'eau.

Pour connaître un environnement technologique proche de la présente invention, on pourra se reporter au document EP 2 100 799 (PEUGEOT CITROEN AUTOMOBILE SA), qui décrit un ensemble d'auvent monté sur un véhicule automobile et les modalités d'évacuation des eaux de ruissellement hors de l'ensemble d'auvent vers l'extérieur du véhicule.

Le document D1 (EP0331644) divulgue un ensemble d'auvent de véhicule automobile, comprenant un collecteur d'air et un collecteur d'eau qui sont transversalement juxtaposés, et séparés par une paroi. Il n'y a pas de solution dans D1 pour résoudre un problème de stagnation d'eau. Le document D1 (EP0331644) divulgue le préambule de la revendication 1.

Le document D2 (JPH0373273) divulgue un auvent avec un canal sur une paroi du collecteur d'eau pour éviter une stagnation de l'eau.

Pour éviter une stagnation d'eau dans le collecteur d'eau, un orifice est traditionnellement ménagé en fond du dégagement. Un tel orifice forme alors un canal de drainage, à travers lequel l'eau éventuellement retenue en fond du dégagement peut être évacuée hors du collecteur d'eau.

De telles modalités d'évacuation de l'eau susceptible d'être retenue en fond d'un dit dégagement méritent d'être améliorées.

En effet, l'orifice est fréquemment au moins en partie obturé par des saletés présentent dans le collecteur d'eau. Ceci a pour conséquence d'affecter le drainage de l'eau stagnant à l'intérieur du dégagement. En outre, un tel orifice est disgracieux et/ou l'accumulation de saletés dans le dégagement peuvent induire un sentiment d'insatisfaction par la clientèle.

De plus, la formation d'un tel orifice nécessite le développement d'un outillage spécifique, avec pour conséquence d'accroître le coût d'obtention de l'ensemble d'auvent. Ceci est à éviter dans le contexte d'une concurrence économique notoirement sévère dans le domaine automobile.

Dans ce contexte, l'invention vise à obvier aux inconvénients liés à une éventuelle stagnation d'eau en fond d'au moins un dégagement ménagé dans un collecteur d'eau que comprend un ensemble d'auvent d'un véhicule automobile. Ledit dégagement est notamment ménagé sur une paroi de séparation entre le collecteur d'eau et un collecteur d'air que comprend l'ensemble d'auvent.

Ainsi, l'invention a pour objet un ensemble d'auvent de véhicule automobile. L'ensemble d'auvent s'étend longitudinalement et comprend un collecteur d'air bordé par un collecteur d'eau qui sont transversalement juxtaposés l'un à l'autre. Le collecteur d'eau comporte au moins un dégagement transversal ménagé sur une paroi de séparation entre le collecteur d'eau et le collecteur d'air, en étant ouvert sur le volume intérieur du collecteur d'eau.

Selon l'invention, l'ensemble d'auvent est principalement reconnaissable en ce que le fond dudit dégagement est ménagé en prolongement transversal du fond du collecteur d'eau, en étant incliné verticalement depuis ladite paroi de séparation vers le fond du collecteur d'eau.

Le fond du dégagement ménage ainsi un déflecteur de guidage de l'eau introduite dans le dégagement vers le fond du collecteur d'eau. Il est ainsi évité une stagnation d'eau en fond du dégagement, et cela sans avoir comme traditionnellement à ménager un orifice de drainage de l'eau en fond du dégagement. La mise en conformation du dégagement, notamment de son fond, peut être avantageusement réalisée à moindres coûts par moulage, simultanément à la formation du collecteur d'eau et/ou du collecteur d'air.

Lorsque l'ensemble d'auvent est monté sur le véhicule, le fond du collecteur d'eau peut s'étendre suivant un plan longitudinal transversal d'extension générale de l'ensemble d'auvent, en étant sensiblement orienté parallèlement au plan de roulage du véhicule. Le fond du collecteur d'eau est de préférence verticalement incliné par rapport au dit plan longitudinal transversal d'extension générale de l'ensemble d'auvent, et donc par rapport au plan de roulage du véhicule.

La pente d'inclinaison du fond du dégagement est définie par rapport à l'orientation du fond du collecteur d'eau suivant la direction transversale, au moins dans la zone de prolongement du fond du collecteur d'eau par le fond du dégagement. Le fond du dégagement et le fond du collecteur d'eau délimitent entre eux, au moins dans leur zone de prolongement, un premier dièdre de préférence largement ouvert, qui présente à titre indicatif un angle d'une valeur comprise entre 150° et 170°.

Il est cependant à tenir aussi compte que la pente d'inclinaison du fond du dégagement est plus spécifiquement définie par rapport à la gravité, pour obtenir une évacuation efficace de l'eau qu'il reçoit. Cependant l'inclinaison du plan de roulage du véhicule est susceptible de varier par rapport à la gravité. Selon l'inclinaison du véhicule, le fond du dégagement potentiellement incliné selon une pente de l'ordre 11° plus ou moins 3° par rapport à un plan horizontal perpendiculaire à la gravité procure l'évacuation de l'eau hors du dégagement.

Dans ce contexte selon une forme de réalisation, le fond du dégagement et le fond du collecteur d'eau délimitent entre eux, au moins dans leur zone de prolongement, un dièdre ouvert d'un angle d'une valeur comprise entre 150° et 170°.

Un tel choix procure un compromis satisfaisant entre un écoulement efficace de l'eau hors du dégagement et une inclinaison du fond du collecteur d'eau procurant un drainage efficace de l'eau qu'il reçoit depuis l'extérieur du véhicule, quelle que soit l'inclinaison du véhicule par rapport à la gravité en situation courante, c'est-à-dire une inclinaison du véhicule suivant ladite pente de l'ordre 11° plus ou moins 3°.

Selon une forme de réalisation, le dégagement est de conformation arquée dans le plan longitudinal-transversal. Plus spécifiquement, le dégagement est conformé en demi-lune dans le plan longitudinal-transversal d'extension du collecteur d'eau. La conformation arquée du dégagement ménage avantageusement une rampe de guidage de l'eau favorisant son écoulement hors du dégagement à sa base délimitée par le fond du dégagement, qui est notamment conformée en demi-lune.

De préférence, l'extension verticale du dégagement est régulière. Autrement dit, une paroi périphérique du dégagement bordant son fond s'étend régulièrement, à contrario d'être infléchie. Ladite paroi périphérique et le fond du dégagement sont notamment concourants, la paroi périphérique étant de préférence inclinée par rapport au fond pour favoriser l'écoulement de l'eau admise dans le dégagement vers son fond, puis vers le fond du collecteur d'eau.

Le dégagement est notamment dédié à autoriser le passage d'un essuie-glace en mouvement équipant le véhicule, en évitant que la paroi de séparation entre le déflecteur d'air et le déflecteur d'eau ne fasse obstacle à la mobilité de l'essuie glace.

Ainsi selon une forme de réalisation, le dégagement est configuré en passage de circulation à son travers d'une extrémité d'un essuie-glace en mouvement équipant le véhicule.

Plus particulièrement, le fond du collecteur d'eau est pourvu d'une ouverture ménageant à travers le fond du collecteur d'eau un passage apte à être traversé par un arbre d'entraînement équipant l'extrémité de l'essuie-glace pour sa mise en mobilité par pivotement alterné.

Dans ce contexte, la conformation du dégagement et/ou sa disposition relative par rapport à l'ouverture sont notamment déterminées selon la cinématique de l'essuie-glace par rapport au dégagement, de manière à autoriser la circulation de l'extrémité de l'essuie-glace à travers le dégagement.

La conformation du dégagement est déterminée pour autoriser la circulation de l'extrémité de l'essuie-glace à travers le dégagement, en considérant une disposition du dégagement par rapport à l'ouverture. La conformation du dégagement prend non seulement en compte la configuration géométrique de sa forme mais aussi son extension suivant les directions longitudinale, transversale et/ou verticale d'extension de l'ensemble d'auvent.

Le choix d'une telle combinaison de paramètres permet de concilier la faculté du dégagement à autoriser le passage de l'extrémité de l'essuie-glace à son travers, avec la faculté du dégagement à évacuer efficacement via son fond l'eau qu'il reçoit vers le fond du collecteur d'eau, selon un trajet d'écoulement de l'eau hors du dégagement prenant en compte la position de l'ouverture ménagée en fond du collecteur d'eau et potentiellement fermée par une coiffe.

Ainsi selon une forme de réalisation, le dégagement est de préférence longitudinalement centré sur l'ouverture, pour être transversalement sensiblement aligné sur un axe de pivot de l'essuie-glace.

De préférence, l'ouverture est ménagée à distance transversale de la paroi de séparation entre le collecteur d'air et le collecteur d'eau. A titre indicatif, ladite distance est de l'ordre comprise entre le quart et une fois de la dimension transversale de l'ouverture.

Selon une forme de réalisation, une pluralité de dits dégagements sont ménagés le long de la paroi de séparation entre le collecteur d'eau et le collecteur d'air.

Les dégagements en pluralité sont susceptibles d'être diversement conformés. Le nombre, les conformations individuelles et/ou les positions longitudinales relatives des dégagements entre eux, sont déterminés selon le nombre, les modalités d'implantation et/ou les cinématiques individuelles et/ou les agencements d'essuie-glace en pluralité équipant le véhicule pour balayer le parebrise.

L'invention a aussi pour objet un véhicule automobile équipé d'un ensemble d'auvent conforme à l'invention.

Les dégagements peuvent être sélectivement exploités pour le passage d'un essuie-glace selon ses modalités d'implantation sur le véhicule, notamment au regard de leur emplacement en fond du collecteur d'eau. Ceci procure à l'ensemble d'auvent une adaptation selon le modèle de véhicule.

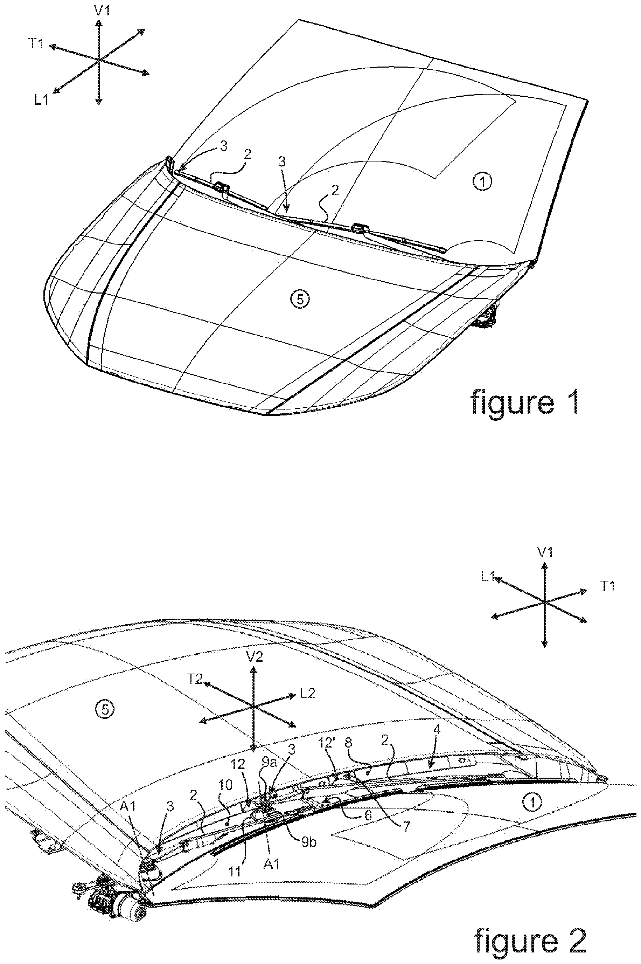

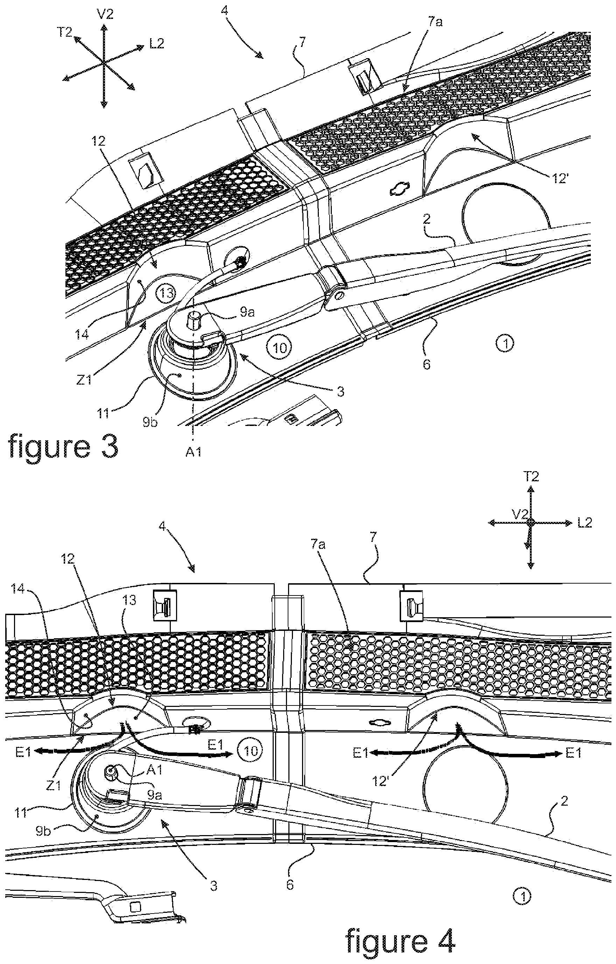

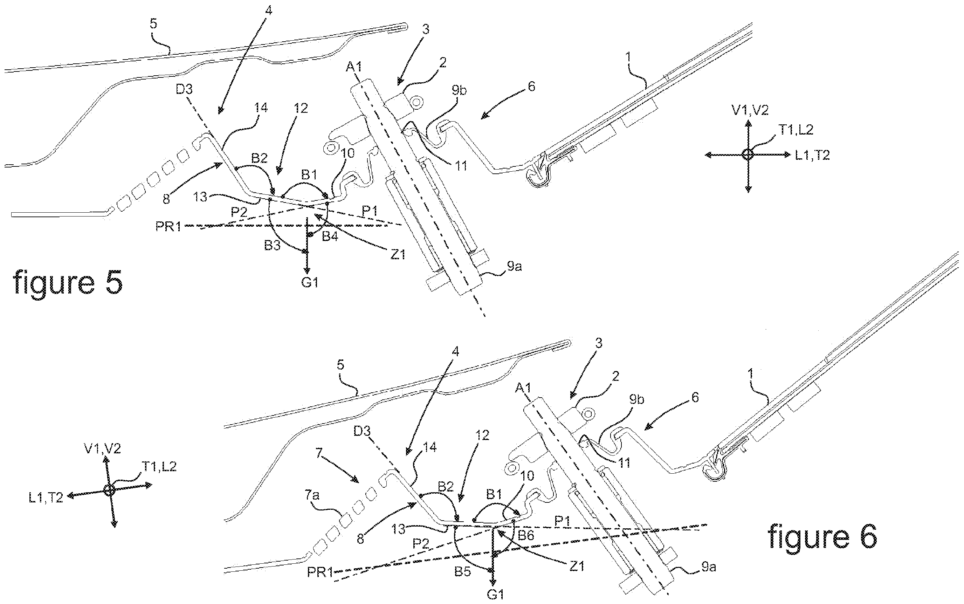

Un exemple de réalisation de la présente invention va être décrit en relation avec les figures des planches annexées, dans lesquelles :
- ) la figure 1 et la figure 2 sont à titre d'exemple des illustrations en perspective respectivement en vue avant et en vue arrière, d'une zone avant d'un véhicule équipé d'un ensemble d'auvent conforme à un exemple de réalisation de l'invention.
- ) la figure 3 et la figure 4 sont des illustrations en perspective partielle de dessus de l'ensemble d'auvent représenté sur la figure 2.
- ) la figure 5 et la figure 6 sont des illustrations en coupe longitudinale de l'ensemble d'auvent représenté sur les figures 3 et 4 installé sur un véhicule, selon diverses inclinaisons du véhicule par rapport à la gravité.

Les figures et leurs descriptions détaillées exposent l'invention selon des modalités particulières qui ne sont pas restrictives quant à la portée de l'invention telle que définie par les revendications. Les figures et leurs descriptions détaillées peuvent servir à mieux définir l'invention, si besoin en relation avec la description générale qui vient d'en être faite.

Sur les figures 1 et 2, un véhicule automobile s'étend typiquement d'avant en arrière suivant une direction longitudinale L1, suivant une direction transversale T1 entre ses côtés droit et gauche par rapport à la position du conducteur, et suivant une direction verticale V1 en élévation par rapport à son plan de roulage. Le véhicule est classiquement muni d'un parebrise 1 et d'au moins un essuie-glace 2 pour son balayage, en vue de le nettoyer et/ou pour évacuer les eaux ruisselantes projetées sur le parebrise 1.

Tel que visible sur la figure 2, les essuie-glace 2 sont à cet effet montés mobiles sur le véhicule autour d'un axe de pivot A1 via l'une de leurs extrémités 3 comme visible sur la figure 2. Les essuie-glaces 2 sont individuellement motorisés, pour être animés en fonctionnement d'un mouvement pivotant alterné autour de leur axe de pivot A1 avec pour effet de balayer le parebrise 1.

Un ensemble d'auvent 4 est installé à la base du parebrise 1, en étant logé au moins en partie sous la capot 5 avant du véhicule. L'ensemble d'auvent 4 s'étend longitudinalement L2 suivant l'extension transversale T1 du véhicule, transversalement T2 suivant l'extension longitudinale L1 du véhicule, et verticalement V2 suivant la direction verticale V1 d'extension du véhicule. L'ensemble d'auvent 4 est notamment configuré pour drainer les eaux de ruissellement et les évacuer hors du véhicule.

L'extrémité 3 des essuie-glace 2 via laquelle ils sont montés pivotant sur le véhicule, est logée à l'intérieur d'un collecteur d'eau 6 que comprend l'ensemble d'auvent 4. Un tel collecteur d'eau 6 est agencé en gouttière pour collecter et drainer les eaux de ruissellement, notamment celles en provenance du parebrise 1, puis les évacuer hors du véhicule.

Sur les figures 3 à 5, l'ensemble d'auvent 4 est partiellement représentée dans la zone d'implantation d'un seul essuie-glace 2 sur le véhicule. L'ensemble d'auvent 4 comprend essentiellement ledit collecteur d'eau 6 et un collecteur d'air 7 muni d'une grille 7a, qui s'étendent longitudinalement L2 suivant l'extension longitudinale L2 de l'ensemble d'auvent 4.

Le collecteur d'air 7 est disposé vers l'avant du véhicule par rapport au collecteur d'eau 6 qui est disposé à la base du parebrise 1. Le collecteur d'air 7 et le collecteur d'eau 6 comportent une paroi 8 qui leur est commune et qui s'étend longitudinalement L2 entre eux. La paroi 8 sépare le collecteur d'air 7 et le collecteur d'eau 6 l'un de l'autre suivant la direction transversale T2 d'extension de l'ensemble d'auvent 4.

L'extrémité 3 d'au moins un essuie-glace 2 via laquelle il est monté mobile sur le véhicule est munie d'un arbre d'entraînement 9a pour sa mise pivotement alterné autour de l'axe de pivot A1. L'arbre d'entraînement 9a traverse le fond 10 du collecteur d'eau 6, en s'étendant suivant l'axe de pivot A1 à travers une ouverture 11 ménagée à travers le fond 10 du collecteur d'eau 6. La notion de fond est appréciée suivant l'extension verticale V2 de l'ensemble d'auvent 4 relativement à sa face prévue d'être orientée vers le capot 5 avant du véhicule.

Le collecteur d'eau 6 est de préférence équipé d'une coiffe 9b de protection de la partie de l'arbre d'entraînement 9a qui émerge à l'intérieur du collecteur d'eau 6. La coiffe 9b forme aussi un bouchon de fermeture de l'ouverture 11 interdisant une introduction d'eau à son travers.

Dans ce contexte, la paroi 8 de séparation entre le collecteur d'air 7 et le collecteur d'eau 6 est susceptible de faire obstacle au pivotement de l'extrémité 3 de l'essuie-glace 2. Pour éviter une telle situation, la paroi 8 de séparation entre le collecteur d'air 7 et le collecteur d'eau 6 comporte un dégagement 12 ouvert vers le volume intérieur du collecteur d'eau 6. Un tel dégagement 12 ménage ainsi un passage de circulation de l'extrémité 3 de l'essuie-glace 2 lors de sa mise en fonctionnement.

Pour éviter une accumulation et/ou une stagnation d'eau à l'intérieur du dégagement 12, le fond 13 du dégagement 12 est ménagé en prolongement du fond 10 du collecteur d'eau 6, en étant incliné depuis la paroi 8 de séparation vers le fond 10 du collecteur d'eau 6, au moins dans leur zone Z1 de prolongement, comme particulièrement visible sur la figures 5 et la figure 6.

Le fond 13 du dégagement 12 ménage une rampe d'écoulement naturel par gravité de l'eau E1 admise à l'intérieur du dégagement 12 vers le fond 10 du collecteur d'eau 6, tel qu'illustré sur la figure 4. Ceci permet d'éviter une stagnation de l'eau E1 à l'intérieur du dégagement 12, qui est évacuée vers le collecteur d'eau 6 pour son drainage et son évacuation vers l'extérieur du véhicule.

Sur la figure 3 et la figure 4, le dégagement 12 est de conformation arquée dans le plan longitudinal-transversal L2-T2. Autrement dit, une paroi 14 périphérique du dégagement 12 bordant son fond 13 s'étend longitudinalement L2 et transversalement T2 en présentant une conformation arquée, dont la corde est orientée vers le volume intérieur du collecteur d'eau 6.

Ainsi, le dégagement 12 présente une conformation en demi-lune ouverte sur le volume intérieur du collecteur d'eau 6. La paroi 14 périphérique du dégagement 12 présente une extension verticale V2 régulière, en étant inclinée par rapport au fond 13 du dégagement pour favoriser l'écoulement de l'eau E1 à l'intérieur du dégagement 12.

Le dégagement 12 est de préférence centré sur l'ouverture 11 ménagée à travers le fond 10 du collecteur d'eau 6. Le dégagement 12 permet de limiter l'extension transversale T2 du collecteur d'eau 6 et donc de l'ensemble d'auvent 4.

Dans ce contexte, l'extension transversale T2 du dégagement 12 est à titre indicatif de l'ordre de la dimension transversale T2 de l'ouverture 11. La distance transversale T2 de séparation entre l'ouverture 11 et le dégagement 12 est de l'ordre comprise entre le quart et une fois de la dimension transversale T2 de l'ouverture 11, pour limiter au mieux l'extension transversale T2 du collecteur d'eau 6.

On relèvera que l'ensemble d'auvent 4 est susceptible d'être pourvu de plusieurs dégagements 12, 12' répartis longitudinalement L2 le long du collecteur d'eau 6. Comme illustré sur les figures 3 et 4 parmi ces dégagements 12,12' en pluralité, deux dégagements 12, 12' peuvent être ménagés à proximité l'un de l'autre et être sélectivement utilisés pour le passage d'un essuie-glace selon sa localisation sur le véhicule.

Plus particulièrement sur la figure 5 et la figure 6, le fond 13 du dégagement 12 s'étend suivant un plan P1 et le fond 10 du collecteur d'eau 6 s'étend suivant un plan P2. Le plan P1 d'extension du fond 13 du dégagement 12 et le plan P2 d'extension du fond 10 du collecteur d'eau 6 sont inclinés inversement par rapport au plan longitudinal-transversal L2-V2 de l'ensemble d'auvent 4, au moins dans leur zone Z1 de prolongement.

Le fond 10 du collecteur d'eau 6 et le fond 13 du dégagement 12 sont ménagés en prolongement l'un de l'autre en délimitant entre eux un premier dièdre ouvert vers le volume intérieur du collecteur d'eau 6. A titre indicatif, l'angle B1 du premier dièdre est compris entre 150° et 170°. Sur l'exemple illustré, l'angle B1 du premier dièdre est de l'ordre de 160°.

La paroi 14 périphérique du dégagement 12 s'étend en élévation suivant une direction P3 qui est inclinée par rapport au plan P1 d'extension du fond 13 du dégagement 12 et qui est inclinée par rapport au plan longitudinal-vertical L2-V2 d'extension de l'ensemble d'auvent 4. La paroi 14 périphérique du dégagement 12 s'étend de préférence régulièrement suivant la direction verticale V2, étant compris à contrario d'une potentielle inflexion imprimée à la paroi 14 périphérique du dégagement 12 suivant sa direction verticale V2 d'extension.

Le fond 13 du dégagement 12 et la paroi 14 périphérique du dégagement 12 délimitent entre eux un deuxième dièdre ouvert vers le volume intérieur du collecteur d'eau 6. A titre indicatif, l'angle B2 du deuxième dièdre est compris entre 130° et 140°. Sur l'exemple illustré, l'angle B2 du deuxième dièdre est de l'ordre de 135°.

L'ensemble d'auvent 4 est orienté suivant ses directions longitudinale L2 et transversale T2 d'extension, suivant les directions longitudinale L1 et transversale T1 d'extension du véhicule. Autrement dit, l'ensemble d'auvent 4 est orienté horizontalement suivant ses directions longitudinale L2 et transversale T2 parallèlement au plan de roulage PR du véhicule.

Il est donné ci-après à titre indicatif des valeurs de pente du fond 13 du dégagement 12 et du fond 13 du collecteur d'eau, au moins dans leur zone Z1 de prolongement, par rapport au plan longitudinal-transversal L2-T2 de l'ensemble d'auvent 4 ou par analogie par rapport au plan PR de roulage du véhicule.

La pente du fond 13 du dégagement 12 est comprise à titre indicatif entre 5° et 10°. Sur l'exemple illustré, la pente d'inclinaison du fond 13 du dégagement 12 est de l'ordre de 8°. La pente du fond 10 du collecteur d'eau 6 est comprise à titre indicatif entre 10° et 15° suivant une inclinaison inverse à celle de la pente du fond 13 du dégagement 12. Sur l'exemple illustré, la pente d'inclinaison du fond 13 du collecteur d'eau 6 est de l'ordre de 8°.

Sur la figure 5, le véhicule est orienté horizontalement. Autrement dit, le plan PR de roulage du véhicule est orienté perpendiculairement à l'axe de gravité G1. Dans ce cas, le fond 13 du dégagement 12 est incliné par rapport à l'axe G1 de gravité d'un angle B3 compris entre 95° et 100°, et plus spécifiquement est de l'ordre de 97°. Le fond 10 du collecteur d'eau 6 est incliné par rapport à l'axe G1 de gravité d'un angle B4 compris entre 95° et 100°, et plus spécifiquement est de l'ordre de 97°.

Il en ressort qu'en station horizontale du véhicule, l'évacuation de l'eau hors du dégagement 12 vers le fond 10 collecteur d'eau 6, ainsi que le drainage de l'eau par le collecteur d'eau 6 via son fond 10 sont obtenus satisfaisants.

Sur la figure 6, le véhicule est en situation penché vers l'avant, son plan PR de roulage étant incliné vers l'arrière. Sur l'exemple illustré, le plan PR de roulage du véhicule est par exemple incliné par rapport à l'axe G1 de gravité d'un angle de l'ordre de 80.

Dans ce cas, le fond 13 du dégagement 12 est incliné par rapport à l'axe G1 de gravité d'un angle B5 supérieur à 90°, compris entre 92° et 97°, et plus spécifiquement est de l'ordre de 93°. Le fond 10 du collecteur d'eau 6 est incliné par rapport à l'axe G1 de gravité d'un angle B6 compris entre 105° et 110°, et plus spécifiquement est de l'ordre de 107°.

Il en ressort qu'en station significativement inclinée du véhicule par rapport à la gravité, l'évacuation de l'eau hors du dégagement 12 vers le fond 10 collecteur d'eau 6, ainsi que le drainage de l'eau par le collecteur d'eau 6 vers son fond 10, sont encore obtenus satisfaisants.

## Revendications

1. Ensemble d'auvent (4) de véhicule automobile, l'ensemble d'auvent (4) s'étendant longitudinalement (L2) et comprenant un collecteur d'air (7) bordé par un collecteur d'eau (6) qui sont transversalement (T2) juxtaposés l'un à l'autre, le collecteur d'eau (6) comportant au moins un dégagement (12) transversal (T2) ménagé sur une paroi (8) de séparation entre le collecteur d'eau (6) et le collecteur d'air (7) en étant ouvert sur le volume intérieur du collecteur d'eau (6), **caractérisé en ce que** le fond (13) dudit dégagement (12) est ménagé en prolongement transversal (T2) du fond (10) du collecteur d'eau (6) en étant incliné verticalement (V2) depuis ladite paroi (8) de séparation vers le fond (10) du collecteur d'eau (6).

2. Ensemble d'auvent (4) selon la revendication 1, **caractérisé en ce que** le fond (13) du dégagement (12) et le fond (10) du collecteur d'eau (6) délimitent entre eux, au moins dans leur zone (Z1) de prolongement, un dièdre ouvert d'un angle (B1) d'une valeur comprise entre 150° et 170°.

3. Ensemble d'auvent (4) selon l'une quelconque des revendications 1 et 2, **caractérisé en ce que** le dégagement (12) est de conformation arquée dans le plan longitudinal-transversal (L2-T2).

4. Ensemble d'auvent (4) selon l'une quelconque des revendications 1 à 3, **caractérisé en ce que** l'extension verticale (V2) du dégagement (12) est régulière.

5. Ensemble d'auvent (4) selon l'une quelconque des revendications 1 à 4, **caractérisé en ce que** le dégagement (12) est configuré en passage de circulation à son travers d'une extrémité (3) d'un essuie-glace (2) en mouvement équipant le véhicule.

6. Ensemble d'auvent (4) selon la revendication 5, **caractérisé en ce que** le fond (10) du collecteur d'eau (6) est pourvu d'une ouverture (11) ménageant à travers le fond (10) du collecteur d'eau (6) un passage apte à être traversé par un arbre d'entraînement (9a) équipant l'extrémité (3) de l'essuie-glace (2).

7. Ensemble d'auvent (4) selon la revendication 6, **caractérisé en ce que** le dégagement (12) est longitudinalement (L2) centré sur l'ouverture (11).

8. Ensemble d'auvent (4) selon l'une quelconque des revendications 6 et 7, **caractérisé en ce que** l'ouverture (11) est ménagée à distance transversale de la paroi (8) de séparation entre le collecteur d'air (7) et le collecteur d'eau (6).

9. Ensemble d'auvent (4) selon l'une quelconque des revendications 1 à 8, **caractérisé en ce qu'**une pluralité de dits dégagements (12,12') sont ménagés le long (L2) de la paroi (8) de séparation entre le collecteur d'eau (6) et le collecteur d'air (7).

10. Véhicule automobile équipé d'un ensemble d'auvent (4) selon l'une quelconque des revendications précédentes.

## Patentansprüche

1. Windlaufanordnung (4) für ein Kraftfahrzeug, wobei die Windlaufanordnung (4) sich in Längsrichtung (L2) erstreckt und einen Luftverteiler (7) umfasst, der von einem Wasserverteiler (6) umgeben ist, die quer (T2) nebeneinander angeordnet sind, wobei der Wasserverteiler (6) mindestens eine Queraussparung (12) (T2) umfasst, die an einer Trennwand (8) zwischen dem Wasserverteiler (6) und dem Luftverteiler (7) ausgebildet ist, wobei sie auf das Innenvolumen des Wasserverteilers (6) offen ist, **dadurch gekennzeichnet, dass** der Wasserverteiler (6) Der Boden (13) der Aussparung (12) ist in Quererstreckung (T2) des Bodens (10) des Wassersammlers (6) von der Trennwand (8) zum Boden (10) des Wassersammlers (6) hin vertikal (V2) geneigt ausgebildet.

2. Verkleidungsanordnung (4) nach Anspruch 1, **dadurch gekennzeichnet, dass** der Boden (13) der Aussparung (12) und der Boden (10) des Wassersammlers (6) zwischen sich zumindest in ihrem Verlängerungsbereich (Z1) ein Dieder begrenzen, das um einen Winkel (B1) mit einem Wert zwischen 150° und 170° offen ist.

3. Vordach-Anordnung (4) nach einem der Ansprüche 1 und 2, **dadurch gekennzeichnet, dass** die Ausnehmung (12) in der Längs-Querebene (L2-T2) bogenförmig ausgebildet ist.

4. Verkleidungsanordnung (4) nach einem der Ansprüche 1 bis 3, **dadurch gekennzeichnet, dass** die vertikale Ausdehnung (V2) der Ausnehmung (12) gleichmäßig ist.

5. Windlaufanordnung (4) nach einem der Ansprüche 1 bis 4, **dadurch gekennzeichnet, dass** die Aussparung (12) als Durchgang durch ihr ein Ende (3) eines sich bewegenden Scheibenwischers (2) ausgebildet ist, mit dem das Fahrzeug ausgerüstet ist.Canopy assembly (4) according to claim 5, **characterized in that** the bottom (10) of the water collector (6) is provided with an opening (11) providing through the bottom (10) of the water collector (6) a passage suitable for being traversed by a drive shaft (9a) fitted to the end (3) of the windscreen wiper (2).

6. Vordach-Anordnung (4) nach Anspruch 5, **dadurch gekennzeichnet, dass** der Boden (10) des Wassersammlers (6) mit einer Öffnung (11) versehen ist, die durch den Boden (10) des Wassersammlers (6) einen Durchgang bildet, der von einer Antriebswelle (9a) durchquert werden kann, die das Ende (3) des Scheibenwischers (2) ausstattet.

7. Verkleidungsanordnung (4) nach Anspruch 6, **dadurch gekennzeichnet, dass** die Aussparung (12) in Längsrichtung (L2) auf der Öffnung (11) zentriert ist.

8. Vordach-Anordnung (4) nach einem der Ansprüche 6 und 7, **dadurch gekennzeichnet, dass** die Öffnung (11) in einem transversalen Abstand von der Trennwand (8) zwischen dem Luftverteiler (7) und dem Wasserverteiler (6) angeordnet ist.

9. Vordächeranordnung (4) nach einem der Ansprüche 1 bis 8, **dadurch gekennzeichnet, dass** eine Vielzahl von Aussparungen (12, 12') entlang (L2) der Trennwand (8) zwischen dem Wassersammler (6) und dem Luftsammler (7) vorgesehen sind.

10. Kraftfahrzeug, das mit einer Verdeckanordnung (4) nach einem der vorhergehenden Ansprüche ausgestattet ist.

## Claims

1. Motor vehicle canopy assembly (4), the longitudinally extending awning assembly (4) comprising an air manifold (7) bordered by a water manifold (6) which are transversely (T2) juxtaposed with each other, the water manifold (6) comprising at least one transverse clearance (12) (T2) provided on a partition wall (8) between the water manifold (6) and the air manifold (7) being open on the internal volume of the water manifold (6), **characterized in that** the The bottom (13) of said recess (12) is formed in a transverse extension (T2) of the bottom (10) of the water collector (6), being inclined vertically (V2) from said partition wall (8) towards the bottom (10) of the water collector (6).

2. Canopy assembly (4) according to claim 1, **characterized in that** the bottom (13) of the recess (12) and the bottom (10) of the water collector (6) define between them, at least in their extension zone (Z1), an open dihedron of an angle (B1) of a value of between 150° and 170°.

3. Canopy assembly (4) according to any one of claims 1 and 2, **characterized in that** the recess (12) has an arcuate shape in the longitudinal-transverse plane (L2-T2).

4. Canopy assembly (4) according to any one of claims 1 to 3, **characterized in that** the vertical extension (V2) of the clearance (12) is regular.

5. Canopy assembly (4) according to any one of claims 1 to 4, **characterized in that** the clearance (12) is configured as a passage through it of an end (3) of a moving windscreen wiper (2) fitted to the vehicle.

6. Canopy assembly (4) according to claim 5, **characterized in that** the bottom (10) of the water collector (6) is provided with an opening (11) providing through the bottom (10) of the water collector (6) a passage suitable for being traversed by a drive shaft (9a) fitted to the end (3) of the windscreen wiper (2).

7. Canopy assembly (4) according to claim 6, **characterized in that** the recess (12) is longitudinally (L2) centered on the opening (11).

8. Canopy assembly (4) according to any one of claims 6 and 7, **characterized in that** the opening (11) is provided at a transverse distance from the partition wall (8) between the air manifold (7) and the water manifold (6).

9. Canopy assembly (4) according to any one of claims 1 to 8, **characterized in that** a plurality of said clearances (12,12') are provided along (L2) the partition wall (8) between the water manifold (6) and the air manifold (7).

10. Motor vehicle equipped with a canopy assembly (4) according to any one of the preceding claims.
